# EUROPEAN PATENT SPECIFICATION

(11) **EP 2 024 216 B1**
(45) Date of publication and mention of the grant of the patent: **11.11.2009**
(21) Application number: 07734720.1
(22) Date of filing: 31.05.2007
(51) Int. Cl.: B60W 10/06, B60W 20/00, B60W 10/30, B60K 6/44, F02B 37/00

(54) **ELECTRICAL GENERATION CONTROL APPARATUS AND CONTROL METHOD IN A VEHICLE**
ELEKTRISCHE ERZEUGUNGSSTEUERUNGSVORRICHTUNG UND STEUERUNGSVERFAHREN IN EINEM FAHRZEUG
APPAREIL DE CONTRÔLE DE GÉNÉRATION ÉLECTRIQUE ET PROCÉDÉ DE CONTRÔLE DANS UN VÉHICULE

(30) Priority: 07.06.2006 JP 2006158728
(43) Date of publication of application: 18.02.2009
(73) Proprietor: TOYOTA JIDOSHA KABUSHIKI KAISHA, Aichi-ken, 471-8571 (JP)
(72) Inventor: KOBAYASHI, Masashi, Toyota-shi, Aichi-ken 471-8571 (JP)
(74) Representative: Kuhnen, Rainer-Andreas
(86) International application number: PCT/IB2007/001430
(87) International publication number: WO 2007/141613

(56) References cited:
- EP-A- 0 755 816
- JP-A- 7 102 897
- US-A1- 2005 050 887

## Description

### BACKGROUND OF THE INVENTION

### 1. Field of the Invention

The present invention relates to an electrical generation control apparatus and control method in a vehicle, and particularly to an electrical generation control apparatus suitable for control of electrical generation in a vehicle having a turbocharger with an electrical generation function.

### 2. Description of the Related Art

As disclosed in Japanese Patent Application Publication No. JP-A-H11-324688, a vehicle having a turbocharger with an electrical generation function is known. When the vehicle decelerates, the turbocharger functions as an electrical generator to perform regeneration of electrical energy.

The foregoing vehicle can store energy to be consumed during deceleration and convert this energy into electrical energy. Such a vehicle improves energy efficiency to greater than that of a vehicle in which a turbocharger does not perform regeneration.

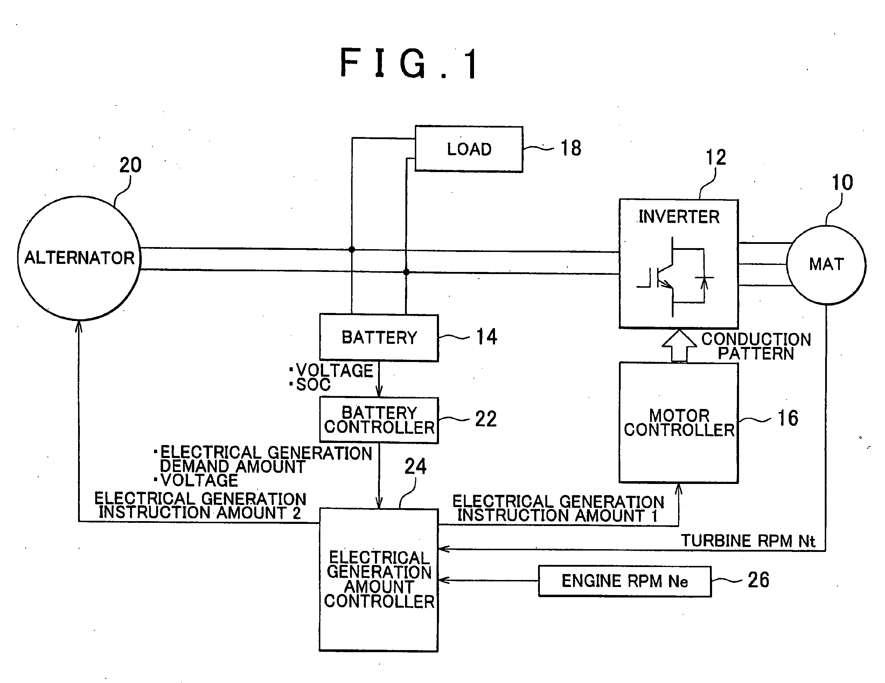

EP-A-0 755 816 discloses an electrical power generation control apparatus in a vehicle, comprising an engine (1, reference numeral not used in Figure 1) adjacent to main generator (2) as well as a turbocharger (3) coupled to a motor-generator (3a) and a turbine (5) coupled to a sub-generator (5), see column 6, lines 15 to 45. D1 emphasizes the need to have the engine run in its most efficient fuel consumption state, cf. column 2, lines 20 to 24 (thermal efficiency), column 16, lines 25 to 44.

JP 07 102897 A, in particular paragraphs 24 to 26 of the automated translation, discloses an engine, a rotational electric machine (11) and a steam turbine generator (16). A controller determines the total amount of electrical power which should be generated and divides this power demand.

An internal combustion engine (12) provided with an alternator (18) and a turbo charger (28 - 32) coupled to a generator (34) is also disclosed in US 2005/050887 A1, Figure 1. While US 2005/050887 A1 mentions efficiency (e.g. paragraphs 59 to 63), the calculations and considerations in US 2005/050887 A1 relate to determine the design of the various components in order to meet assumed driving conditions.

An alternator that generates electrical power using the output torque from the internal combustion engine as energy is usually mounted aboard a vehicle. For this reason, a vehicle provided with a turbocharger having an electrical generation function has two electrical generators.

The alternator rotates in synchronization with the crankshaft of the internal combustion engine. The turbocharger, however, uses exhaust energy as its main drive source. The electrical generation efficiencies of the alternator and the turbocharger are greatly affected by the rotation conditions of each. For this reason, if they rotate independently of one another, the electrical generation efficiencies of each also vary independently of one another.

If the electrical generation efficiency of the alternator and the electrical generation efficiency of the turbocharger vary independently of one another, when the vehicle is driven, such conditions as one in which the former exceeds the latter or the reverse can freely occur. In order to achieve a high energy efficiency in a vehicle, it is desirable that the generator having good electrical generation efficiency be used with priority to bear the load of electrical generation.

In a conventional vehicle, however, control is not performed to mutually link electrical generation by the alternator to electrical generation by the turbocharger. Additionally, processing in a conventional vehicle is not done to establish the electrical generation load on each in accordance with the electrical generation efficiency of each. For this reason, although a conventional vehicle has an alternator and a turbocharger, it does not achieve the maximum efficiency from both in generating electricity.

### SUMMARY OF THE INVENTION

The present invention has an object to provide an electrical generation control apparatus in a vehicle achieving high efficiency electrical generation by properly allocating electrical generation loads to an alternator and a turbocharger.

A first aspect of the present invention is an electrical generation control apparatus in a vehicle having an alternator that converts an output torque of an internal combustion engine into electrical energy; a turbocharger that has an electrical generation function capable of converting rotation of at least one of a turbine and a compressor into electrical energy; a first efficiency calculation means that calculates an electrical generation efficiency of the turbocharger as a first efficiency; a second efficiency calculation means that calculates an electrical generation efficiency of the alternator as a second efficiency; an electrical generation instruction amount calculation means that calculates a first electrical generation instruction amount to be demanded of the turbocharger and a second electrical generation instruction amount to be demanded of the alternator, based on the first efficiency and the second efficiency; a first control means that instructs the turbocharger to generate electricity responsive to the first electrical generation instruction amount; and a second control means that instructs the alternator to generate electricity responsive to the second electrical generation instruction amount.

A second aspect of the present invention is the electrical generation control apparatus in a vehicle according to the first aspect, further having a turbo revolution speed detection means that detects a turbo revolution speed and an engine revolution speed detection means that detects an engine revolution speed, wherein the first efficiency calculation means may calculate the first efficiency based on the turbo revolution speed and the second efficiency calculation means may calculate the second efficiency based on the engine revolution speed.

A third aspect of the present invention is the electrical generation control apparatus in a vehicle according to either the first or second aspects, wherein the electrical generation instruction amount calculation means may calculate the first electrical generation instruction amount as a value that is greater than the second electrical generation instruction amount if the first efficiency is higher than the second efficiency, and may calculate the second electrical generation instruction amount as a value that is greater than the first electrical generation instruction amount if the second efficiency is greater than the first efficiency.

A fourth aspect of the present invention is the electrical generation control apparatus in a vehicle according to any one the first to third aspects, further having an electrical generation demand amount calculation means that calculates a electrical generation demand amount in a vehicle, wherein the electrical generation instruction amount calculation means may include a first possible electrical power acquisition means acquiring an electrical power generated by the turbocharger as a first possible electrical power; a second possible electrical power acquisition means acquiring the electrical power generated by the alternator as a second possible electrical power; a turbocharger electrical generation priority means allocating the electrical generation demand amount with priority to the first electrical generation instruction amount if the first efficiency is higher than the second efficiency and taking a part of the electrical generation demand amount exceeding the first possible electrical power as the second electrical generation instruction amount; and an alternator electrical generation priority means allocating the electrical generation demand amount with priority to the second electrical generation instruction amount if the second efficiency is higher than the first efficiency and taking a part of the electrical generation demand amount exceeding the second possible electrical power as the first electrical generation instruction amount.

A fifth aspect of the present invention is the electrical generation control apparatus in a vehicle according to any one of the first to the fourth aspects, that may further have an electrical generation limit value calculation means calculating the allowed amount of electrical power generation by the turbocharger as the electrical generation amount limit value, based on a condition of the internal combustion engine wherein the electrical generation instruction amount calculation means includes a turbocharger electrical generation limiting means limiting the first electrical generation instruction amount to the electrical generation amount limit value or lower.

A sixth aspect of the present invention is the electrical generation control apparatus in a vehicle according to the fifth aspect, that may further have at least one of an exhaust temperature detection means that detect an exhaust system temperature and an exhaust pressure detection means detecting an exhaust system pressure wherein the electrical generation limit value calculation means calculates the electrical generation amount limit value, referencing at least one of the exhaust system temperature and the exhaust system pressure as the internal combustion engine condition.

A seventh aspect of the present invention is the electrical generation control apparatus in a vehicle according to any one of the first to the sixth aspects, that may further have a battery voltage sensing means sensing a voltage of a battery storing electrical energy generated by the turbocharger wherein the first efficiency calculation means calculates the first efficiency, taking into consideration the voltage of the battery.

According to the first aspect of the present invention, the first electrical generation instruction amount with respect to a turbocharger and a second electrical generation instruction amount with respect to an alternator can be calculated based on the electrical generation efficiency of the turbocharger (first efficiency) and the electrical generation efficiency of the alternator (second efficiency). Having done this, it is possible to cause the turbocharger and the alternator to generate electricity in response to the electrical generation instruction amounts respectively. For this reason, this aspect of the present invention can allocate loads of electrical generation between the turbocharger and the alternator, thereby achieving a high overall electrical generation efficiency.

According to the second aspect of the present invention, the electrical generation efficiency of the turbocharger (first efficiency) can be calculated based on the turbo revolution speed, and the electrical generation efficiency of the alternator (second efficiency) can be calculated based on the engine revolution speed. According to this calculation method it is easy to accurately obtain these electrical generation efficiencies.

According to the third aspect of the present invention, if the electrical generation efficiency of the turbocharger (first efficiency) is greater than the electrical generation efficiency of the alternator (second efficiency), the electrical generation instruction amount to the turbocharger (first electrical generation instruction amount) can be made a value that is higher than the electrical generation instruction amount (second electrical generation instruction amount) to the alternator. In the reverse case, it is possible to reverse the relationship of the instruction amounts. For this reason, this aspect of the present invention, by constantly giving priority to the equipment having a higher electrical generation efficiency in generating electricity, achieves a high overall electrical generation efficiency.

According to the fourth aspect of the present invention, if the electrical generation efficiency of the turbocharger (first efficiency) is greater than the electrical generation efficiency of the alternator (second efficiency), priority is given to the turbocharger in generating electricity. Only if the electrical generation demand amount is not met by the turbocharger alone is the alternator made to generate the deficiency amount. In the reverse case, the deficiency amount not generated by the alternator can be generated by the turbocharger. For this reason, this aspect of the present invention achieves a high overall electrical generation efficiency.

According to the fifth aspect of the present invention, it is possible to calculate an electrical generation amount limit value that the turbocharger can generate without a problem, based on a condition of the engine. Having done that, the electrical generation amount of the turbocharger can be made smaller than the above-noted electrical generation amount limit value. For this reason, this aspect of the present invention effectively prevents improper damage to the internal combustion engine by excessive electrical generation by the turbocharger.

According to the sixth aspect of the present invention, the electrical generation amount limit value of the turbocharger is caused to reflect at least one of an exhaust system temperature or the exhaust system pressure. For this reason, this aspect of the present invention can provide proper protection to the exhaust system, which is the most susceptible to damage by turbocharger electrical generation.

According to the seventh aspect of the present invention, it is possible to cause the electrical generation efficiency of the turbocharger (first efficiency) to reflect the battery voltage. The electrical power generated by the turbocharger can be efficiently stored in the battery the lower is the battery voltage. For this reason, this aspect of the present invention can take the first efficiency as an accurate characteristic value, which includes the efficiency of charging the battery.

### BRIEF DESCRIPTION OF THE DRAWINGS

The foregoing and further objects, features, and advantages of the invention will become apparent from the following description of preferred embodiments with reference to the accompanying drawings, wherein like numerals are used to represent like elements, and wherein:
FIG 1 is a schematic drawing for describing the configuration of a first embodiment of the present invention;
FIG 2 is a graph showing the characteristics of the electrical generation efficiency ηa of an alternator;
FIG. 3 is a graph showing the characteristics of the electrical generation efficiency of a turbocharger;
FIG. 4 is a flowchart showing a routine executed in the first embodiment of the present invention;
FIG 5 is a drawing for describing the configuration of a second embodiment of the present invention;
FIG 6 is a map of the electrical generation limit value to which a motor-assisted turbocharger should be subjected;
FIG 7 is a flowchart of a routine executed by the second embodiment of the present invention;
FIG 8 is a flowchart of a routine executed by a third embodiment of the present invention; and
FIG. 9 is a map of the electrical generation efficiency ηm used in the third embodiment of the present invention.

### DETAILED DESCRIPTION OF THE PREFERRED EMBODIMENTS

FIG 1 shows the configuration of the first embodiment of the present invention. The system shown in FIG 1 has a motor-assisted turbocharger (MAT) 10. The MAT 10 has a compressor disposed in the intake passage of the internal combustion engine; a turbine disposed in the exhaust passage, and a motor that that provides motorized drive to these elements (none of which are illustrated).

In the MAT 10, in addition to being able to use the exhaust energy to rotate the turbine and the compressor, it is possible to rotate the turbine and/or compression using the motor as a drive source. When the turbine and compressor are rotating, the MAT 10 can cause the motor to function as an electrical generator, the rotating energy of which is converted into electrical energy.

A battery 14 is connected to the MAT 10 via an inverter 12. A motor control apparatus 16 is connected to the inverter 12. The motor control apparatus 16 can apply signal with a desired conduction pattern to the inverter 12. By receiving this signal, the inverter 12 converts the DC voltage from the battery 14 into a 3-phase AC voltage output to the MAT 10 or converts the 3-phase AC voltage from the MAT 10 into a DC voltage supplied to the battery 14.

In addition to the inverter 12, a load 18 and an alternator 20 are connected to the battery 14. The alternator 20 rotates in synchronization with the crankshaft of the internal combustion engine to supply a DC voltage to the battery 14.

A battery control apparatus 22 is connected to the battery 14. More specifically, the battery 14 supplies to the battery control apparatus 22 a signal representing the battery voltage Vb and an SOC (state-of-charge) signal representing the charge state of the battery 14. The battery control apparatus 22 calculates the electrical generation demand amount based on the battery voltage Vb and the SOC signal. The electrical generation demand amount calculated in the battery control apparatus 22 is supplied, along with the battery voltage Vb, to an electrical generation amount control apparatus 24.

The electrical generation amount control apparatus 24 may be implemented using a microcomputer. An Nt detection sensor detecting the turbine revolution speed Nt (turbine rpm Nt) is built into the MAT 10. A signal representing the turbine revolution speed Nt is supplied from the Nt detection sensor to the electrical generation amount control apparatus 24. A signal representing the engine revolution speed Ne (engine rpm Ne) is supplied from an Ne detection sensor 26 to the electrical generation amount control apparatus 24.

The electrical generation amount control apparatus 24 calculates the electrical generation instruction amount 1 to be demanded of the MAT 10 and the electrical generation instruction amount 2 to be demanded of the alternator 20, based on the various parameters described above, specifically, parameters such as electrical generation demand amount, the turbine revolution speed Nt, and also the engine revolution speed Ne and the like.

The electrical generation instruction amount 1 is supplied to the motor control apparatus 16. An revolution speed instruction amount (not shown) is also supplied to the motor control apparatus 16. The electrical generation instruction amount 1 and the revolution speed instruction amount can be selectively supplied to the motor control apparatus 16. If the motor control apparatus 16 receives the electrical generation instruction amount 1, the motor control apparatus 16 applies to the inverter 12 a conduction pattern to cause electrical power from the MAT 10 to flow to the battery 14 in response to the electrical generation instruction amount 1. On the other hand, if the motor control apparatus receives the revolution speed instruction amount, the motor control apparatus 16 supplies to the inverter 12 a drive conduction pattern to motor-drive the MAT 10 in response to the revolution speed instruction amount.

The revolution speed instruction amount is supplied under the condition in which it is not possible with only the exhaust energy to quickly ramp up the turbine revolution speed. According to the system of this embodiment, for example, by applying an appropriate revolution speed instruction amount to the motor control apparatus 16 at the time of a demand for sudden acceleration, it is possible to quickly ramp up the revolution speed of the turbine and the compressor, thereby effectively eliminating so-called turbo-lag. Also, according to the system of this embodiment by applying the electrical generation instruction amount 1 to the motor control apparatus 16, it is possible to effectively reclaim and convert the rotation energy of the turbine and the compressor to electrical energy.

The alternator 20 receives the supplied electrical generation instruction amount 2 and generates electrical power in response to the electrical generation instruction amount 2. The system of this embodiment, therefore, by supplying the appropriate electrical generation instruction amounts 1, 2 can cause the MAT 10 and the alternator 20 to generate electricity in response to the respectively demands.

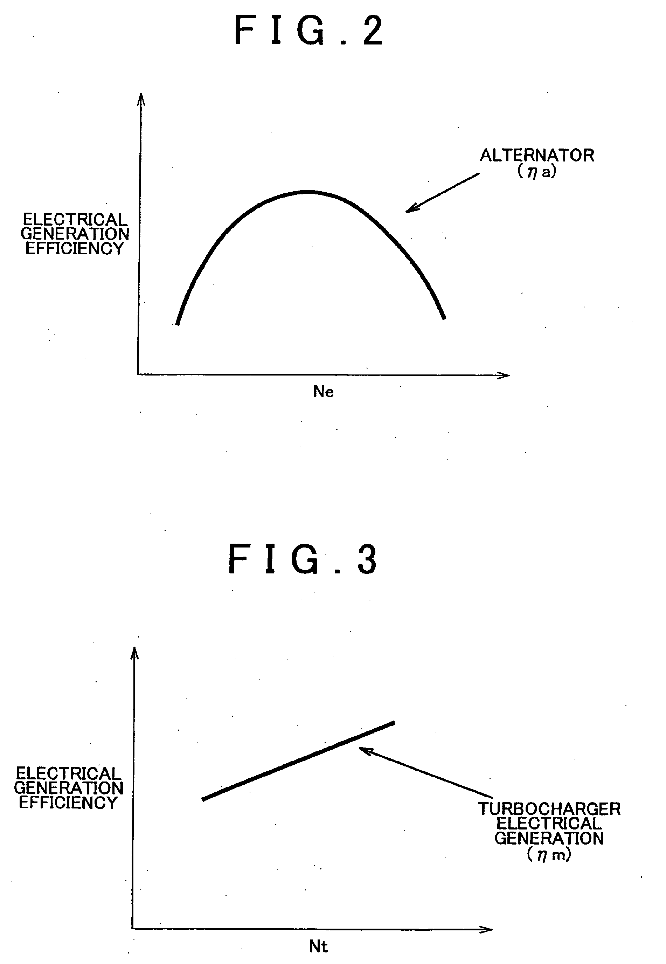

FIG. 2 is a drawing describing the characteristics of the electrical generation efficiency ηa of the alternator 20. The electrical generation efficiency ηa used herein is the efficiency of electrical generation by the alternator 20 with respect to the amount of fuel supplied to the internal combustion engine. Thus, the electrical generation efficiency ηa is higher the smaller the amount of fuel is that must be supplied for a unit of electrical generation.

The alternator 20, as shown in FIG. 2, exhibits characteristics in which the electrical generation efficiency ηa varies in response to the engine revolution speed Ne. More specifically, the alternator 20 exhibits a peak electrical generation efficiency ηa in the mid-range of the engine revolution speed Ne.

FIG 3 describes the electrical generation efficiency ηm characteristics of the MAT 10. Similar to the above-described ηa, the electrical generation efficiency ηm is the electrical generation efficiency of the MAT 10 with respect to the amount of fuel supplied to the internal combustion engine, which is higher the smaller the amount of fuel is that must be supplied for a unit of electrical generation. As shown in FIG 3, the electrical generation efficiency ηm of the MAT 10 is dependent upon the turbine revolution speed Nt, and tends to be larger, the higher is the turbine revolution speed Nt.

The turbine revolution speed Nt, when there is no motor assist, is a value responsive to the exhaust energy. For the same engine revolution speed Ne, the exhaust energy value varies, depending upon the intake air amount and fuel injection amount. For this reason, the turbine revolution speed Nt and the engine revolution speed Ne each vary independently of one another. Therefore, the electrical generation efficiency ηa of the alternator 20 and the electrical generation efficiency ηm of the MAT 10 each vary independently during operation of the internal combustion engine. As a result, in the system of this embodiment, the condition in which the electrical generation efficiency ηa of the alternator 20 is greater than the electrical generation efficiency ηm of the MAT 10 and reverse condition occur randomly.

In a condition in which ηa is greater than ηm, having the work of generating electricity done by the alternator 20 is advantageous from the standpoint of energy efficiency. In a condition in which ηm is greater than ηa, it is advantageous from standpoint of efficiency to have the MAT 10 bear the burden of electrical generation. Given this, the system of this embodiment senses the electrical generation efficiency ηa of the alternator 20 and the electrical generation efficiency ηm of the MAT 10 and gives priority in generating electricity to the one having the higher efficiency.

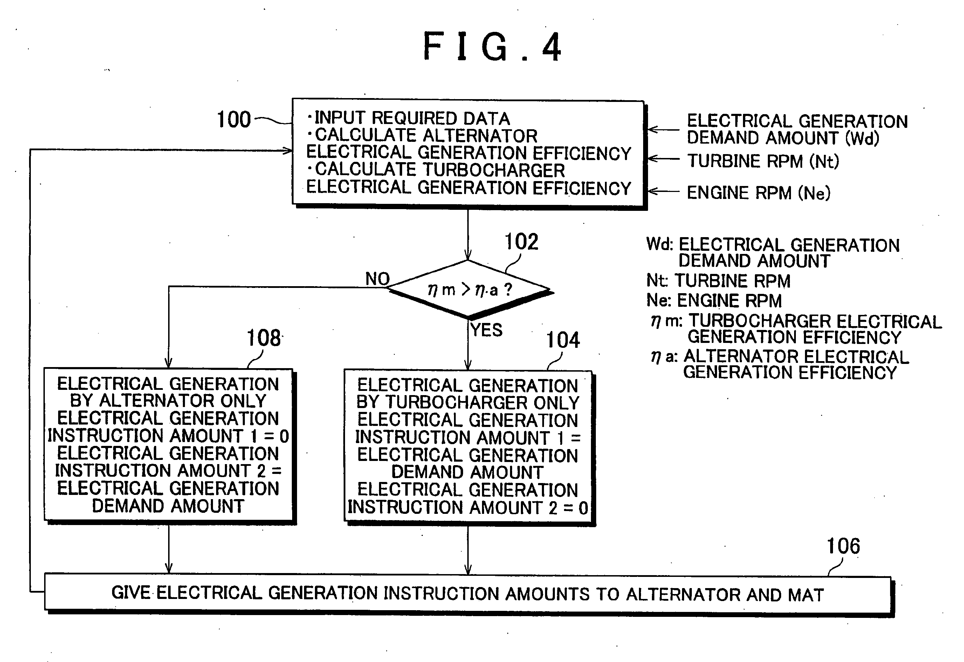

The specific processing performed in the first embodiment is as follows. FIG. 4 is a flowchart showing the details of the processing executed by the electrical generation amount control apparatus 24 in the first embodiment of the present invention. In the routine shown in FIG 4, required data is first input and the electrical generation efficiencies ηa, and ηm of the alternator 20 and the MAT 10 are calculated (step 100).

Specifically, the electrical generation demand amount Wd calculated by the battery control apparatus 22, the turbine revolution speed Nt supplied from the MAT 10, and the engine revolution speed Ne detected by the Ne detection sensor are captured as required data. The electrical generation amount control apparatus 24 stores electrical generation efficiency maps corresponding to FIG. 2 and FIG 3. The electrical generation efficiency ηa of the alternator 20 is calculated based on the engine revolution speed Ne, in accordance with the map corresponding to FIG 2. The electrical generation efficiency ηm of the MAT 10 is calculated based on the turbine revolution speed Nt, in accordance with the map corresponding to FIG 3.

Next, a judgment is made as to whether the electrical generation efficiency ηm of the MAT 10 is greater than the electrical generation efficiency ηa of the alternator 20 (step 102).

As a result, if the condition ηm>ηa is recognized, processing is executed that has the MAT 10 perform the work of electrical generation (step 104). Specifically, with the electrical generation instruction amount 1 with respect to the MAT 10 taken as the electrical generation demand amount Wd, processing is performed with the electrical generation instruction amount 2 of zero with respect to the alternator 20.

Next, when the above-noted processing is completed, the electrical generation instruction amount 1 is issued to the MAT 10 (more precisely, to the motor control apparatus 16) and the electrical generation instruction amount 2 is issued to the alternator 20 (step 106). As a result, electrical generation corresponding to electrical generation demand amount Wd is done by the MAT 10.

If the judgment is made at the above-noted step 102 that the condition ηm>ηa is not satisfied, processing is executed that causes the alternator 20 perform the work of electrical generation (step 108). At this point, with the electrical generation instruction amount 1 with respect to the MAT 10 made zero, processing is performed with the electrical generation instruction amount 2 with respect to the alternator 20 taken as the electrical generation demand amount Wd.

When the processing of step 108 is executed, the processing of the next step 106 issues the electrical generation demand amount Wd to the alternator 20. As a result, the MAT 10 goes into the generation-stopped condition, and the electrical generation demand amount Wd is generated by only the alternator 20.

As described above, of the MAT 10 and the alternator 20, the system of this embodiment can cause the one that has the higher electrical generation efficiency to generate electricity. For this reason, according to the system of this embodiment it is possible to minimize the amount of fuel required to obtain the electrical generation demand amount Wd, and possible to improve the fuel economy characteristics of the vehicle.

Although in the above-described first embodiment the electrical generation demand amount Wd is selectively generated by either the MAT 10 or the alternator 20, based on whether the condition ηm>ηa is satisfied, the present invention is not restricted in this manner. Specifically, the present invention may assign the work of electrical generation with priority given to the element having the higher electrical generation efficiency.

Specifically, the MAT 10 and the alternator 20 each have a prescribed maximum electrical output (rated output) and an value of current that can be continuously output (minimum guaranteed current). In the case in which the electrical generation demand amount Wd exceeds these rated outputs or minimum guaranteed current, it is not possible for the MAT 10 alone or the alternator 20 alone to generate the electrical generation demand amount Wd. In such cases, the burden of the amount of electrical generation deficiency with respect to the electrical generation demand amount Wd may allocated to the equipment judged to have the lower electrical generation efficiency.

Taking the example of the flowchart shown in FIG. 4, the following processing may be performed at step 104. Specifically, a judgment is first made as to whether the rated output or minimum guaranteed current of the MAT 10 (hereinafter referred to as "first possible electrical power") is sufficient to handle the electrical generation demand amount Wd. If the result of this judgment is positive, as described above the electrical generation instruction amount 1 is taken as the electrical generation demand amount Wd and the electrical generation instruction amount 2 is taken as zero. In the case of a negative result to the judgment, the electrical generation instruction amount 1 is adjusted to the rated output or minimum guaranteed current of the MAT 10 and the deficiency with respect to the electrical generation demand amount Wd is taken as the electrical generation instruction amount 2. According to this processing it is possible to achieve the electrical generation demand amount Wd regardless of the restriction on the first possible electrical power.

At step 108 the following processing may be performed. Specifically, a judgment is first made as to whether the rated output or minimum guaranteed current of the alternator 20 (hereinafter referred to as "second possible electrical power") is sufficient to handle the electrical generation demand amount Wd. If the result of this judgment is positive, as shown in FIG 4 the electrical generation instruction amount 2 is taken as the electrical generation demand amount Wd and the electrical generation instruction amount 1 is taken as zero. In the case of a negative result to the judgment, the electrical generation instruction amount 2 is adjusted to the rated output or minimum guaranteed current of the alternator 20, and the deficiency with respect to the electrical generation demand amount Wd is taken as the electrical generation instruction amount 1. According to this processing it is possible to achieve the electrical generation demand amount Wd regardless of the restriction on the second possible electrical power. This variation is not restricted to the first embodiment, and may be applied in the same manner to other embodiments described below.

In the first embodiment described above, the ratio of the amount of generated electricity to the amount of fuel supplied to the internal combustion engine was taken as the electrical generation efficiencies ηm, ηa. For this reason, according to the system of this embodiment, by performing processing in accordance with the routine shown in FIG. 4, it is possible to minimize the amount of fuel needed to be consumed to generate electricity, enabling an improvement in the fuel economy characteristics of the vehicle. However, the electrical generation efficiencies ηm, ηa are not restricted to being physical quantities as defined above. Specifically, the electrical generation efficiencies ηm, ηa may be efficiencies in the case in which the MAT 10 or the alternator 20 is evaluated alone, that is, efficiencies representing the degree of electrical generation of each of the MAT 10 and the alternator 20 with respect to the input energy.

In the above-described first embodiment, a battery control apparatus 22 that calculates the electrical generation demand amount Wd is provided, and the electrical generation instruction amounts 1, 2 are set based on that electrical generation demand amount Wd. By performing this processing, it is possible to generate the just the right amount of electrical power required by the vehicle, thereby avoiding such conditions as overcharging of the battery 14. However, in the present invention, the calculation of the electrical generation demand amount Wd is not absolutely necessary. Specifically, of the MAT 10 and the alternator 20, it is sufficient to give priority in electrical generation to the one that has the higher ηm or ηa, and it is not absolutely necessary to cause the amount of electrical generation to coincide with the electrical generation demand amount Wd.

Also, although in the above-described first embodiment the turbocharger having an electrical generation function is restricted to the MAT 10, which is a turbocharger having a motor-assist function, the present invention is not restricted in this manner. Specifically, the turbocharger in the present invention need only have an electrical generation function, and need not have a motor-assist function.

Furthermore, in the first embodiment described above, the electrical generation efficiency ηm may correspond to the "first efficiency" in the above-noted first aspect, and the electrical generation efficiency ηa may correspond to the "second efficiency" in the above-noted first aspect. In step 100, the electrical generation amount control apparatus 24 may implement the "first efficiency calculation means" in the first aspect by calculating the ηm and may implement the "second efficiency calculation means" in the first aspect by calculating the ηa. In steps 104 and 108, the "electrical generation instruction amount calculation means" of the first aspect may be implemented by calculation of the electrical generation instruction amount 1 and electrical generation instruction amount 2, and the "first control means" and "second control means" in the first aspect may be implemented by executing the processing of step 106.

In the above-described first embodiment, the Nt detection sensor built into the MAT 10 may correspond to the "turbo revolution speed detection means" in the second aspect, and the Ne detection sensor 26 may correspond to the "engine revolution speed detection means" in the second aspect.

In the above-described first embodiment, the battery control apparatus 22 may correspond to the "electrical generation demand amount calculation means" in the fourth aspect. The electrical generation amount control apparatus 24 may implement the "first possible electrical power acquisition means" in the fourth aspect by acquiring the first possible electrical power, may implement the "second possible electrical power acquisition means" in the fourth aspect by acquiring the second possible electrical power, may implement the "turbocharger electrical generation priority means" of the fourth aspect by causing the execution of the processing of step 104 in the above-noted variation, and may implement the "alternator electrical generation priority means" of the fourth aspect by causing execution of the processing of step 108 in the above-described variation.

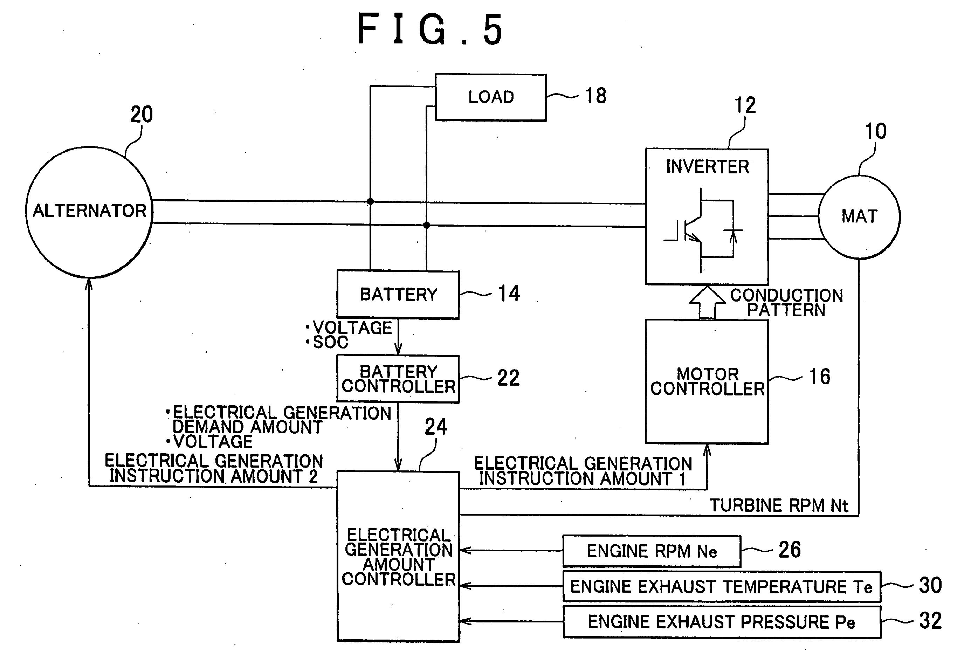

The second embodiment of the present invention is described below, with reference made to FIG 5 through FIG 7. FIG 5 describes the configuration of the second embodiment of the present invention. In FIG 5, constituent elements that are the same as in FIG 1 are assigned the same reference numerals and are either not described or described only briefly hereinunder.

The system shown in FIG 5 is the same as the system shown in FIG 1, with the exception of having the exhaust temperature sensor 30 and the exhaust pressure sensor 32. The exhaust temperature sensor 30 measures the exhaust system temperature Te of the internal combustion engine. The exhaust pressure sensor 32 measures the exhaust system pressure Pe of the internal combustion engine.

If the MAT 10 is used as an electrical generator, the turbine of the MAT 10 is an element that increases the exhaust resistance in the exhaust system. The exhaust resistance is larger, the greater is the amount of electrical generation by the MAT 10. For this reason, the temperature Te and the pressure Pe of the exhaust system tend to become high if a large amount of electrical generation is done. The above-described exhaust temperature sensor 30 and the exhaust pressure sensor 32 are disposed at locations at which such temperature and pressure variations are prominent and can be detected. More specifically, these sensors may be disposed between the exhaust port of the internal combustion engine and the turbine of the MAT 10.

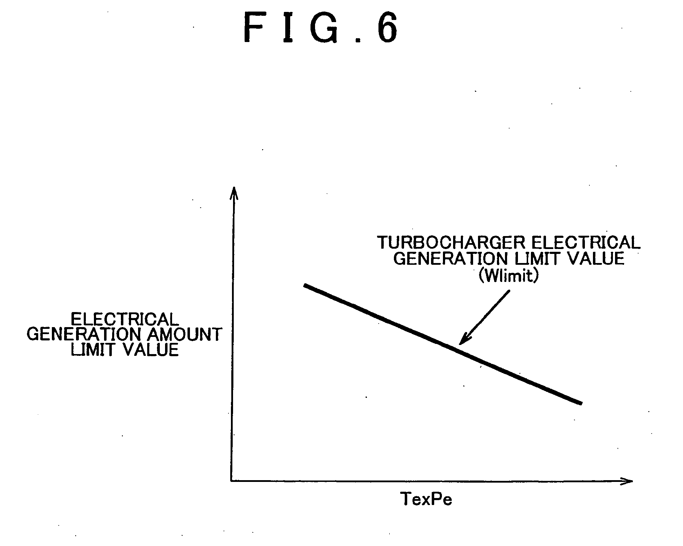

FIG 6 shows a map of the electrical generation limit value Wlimit to be applied to the MAT 10, from the standpoint of protecting the exhaust system of the internal combustion engine. As described above, the exhaust system temperature Te and the exhaust system pressure Pe of the internal combustion engine tend to increase, the greater is the electrical generation by the MAT 10. For this reason, in order to protect the exhaust system it is desirable that the electrical generation amount of the MAT 10 be held lower, the higher is the exhaust system temperature Te and the higher is the exhaust system pressure Pe.

In the map shown in FIG 6, the electrical generation limit value Wlimit takes lower values, the larger is Te x Pe. Therefore, if the electrical generation limit value Wlimit is set in accordance with this map, it is possible to satisfy the above-noted demand and have the MAT 10 bear the burden of electrical generation, thereby effectively preventing damage to the exhaust system of the internal combustion engine.

In this embodiment, when the electrical generation limit value Wlimit is set to a small value, a condition can occur in which the electrical generation demand amount Wd cannot be handled by the MAT 10 alone. Because the system in this embodiment has not only the MAT 10 but also the alternator 20, in such cases it is possible to supplement the deficiency in the electrical generation by the alternator 20. In the system of this embodiment, therefore, even in the case in which the MAT 10 should be given priority, based on a comparison of efficiencies, in performing electrical generation, if the electrical generation limit value Wlimit of the MAT 10 does not satisfy the electrical generation demand amount Wd, the alternator 20 is caused to generate electricity to make up for the deficiency.

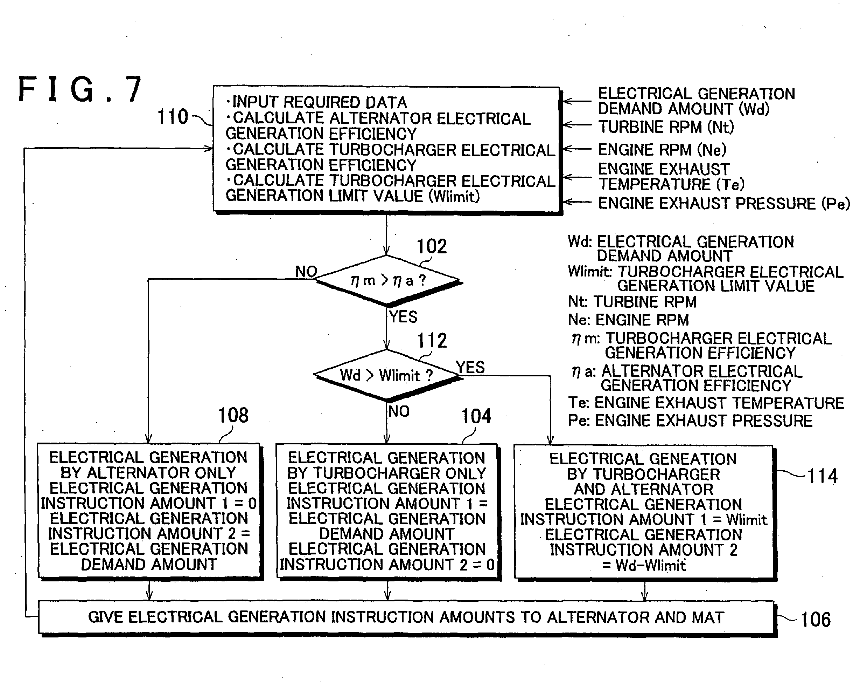

The specific processing performed by the second embodiment is as follows. FIG 7 is a flowchart of the routine executed by the electrical generation amount control apparatus 24 in this embodiment. In FIG. 7, steps that are the same as steps shown in FIG 4 are assigned the same reference numerals and either not described or described only briefly hereinunder.

In the routine shown in FIG. 7, the processing of step 110 is first performed. At step 110, in addition to the processing of the above-described step 100, the following processing is performed. Specifically, at this point the exhaust system temperature Te and the exhaust system pressure Pe are captured as required data. At step 110 the electrical generation amount limit value Wlimit is calculated, along with the calculation of the electrical generation efficiencies ηm, ηa of the MAT 10 and the alternator 20. The electrical generation amount control apparatus 24 in this embodiment store the map shown in FIG 6. At step 110, the map is referenced and the electrical generation amount limit value Wlimit is determined, with Te x Pe as a parameter.

In this routine if, at step 102, the electrical generation efficiency ηm of the MAT 10 is judged as being higher than the electrical generation efficiency ηa of the alternator 20, a judgment is made at step 112 of whether the electrical generation demand amount Wd exceeds the electrical generation amount limit value Wlimit. If the result is that the judgment is that the condition Wd>Wlimit is not satisfied, it is possible to judge that it is possible to generate the electrical generation demand amount Wd within the range of the electrical generation amount limit amount Wlimit, that is, it is possible to judge that the MAT 10 alone can handle the generation of the electrical generation demand amount Wd. In this case, processing similar to FIG 4 is executed at step 104, and the electrical generation demand amount Wd is handled by the MAT 10 alone.

It, however, the judgment is made at step 112 that the condition Wd>Wlimit is satisfied, it is possible to judge that the electrical generation demand amount cannot be generated within the range of the electrical generation amount limit value Wlimit. In this case, processing is executed to make up for the deficiency by the alternator 20 (step 114). Specifically, at this point the electrical generation instruction amount 1 to the MAT 10 is set to the electrical generation amount limit value Wlimit, and the deficiency with respect to the electrical generation demand amount Wd (Wd - Wlimit) is taken as the electrical generation instruction amount 2 with respect to the alternator 20.

After the above, the processing of step 106 is executed to cause the MAT 10 and the alternator 20 to generate electricity responsive to the electrical generation instruction amounts 1 and 2, respectively. As a result, the desired electrical generation is performed efficiently, without the exhaust system being damaged.

In the above-described second embodiment the electrical generation amount control apparatus 24 may implement the "electrical generation amount limit value calculation means" of the first aspect by calculating the electrical generation amount limit value Wlimit at step 110, and may implement the "turbocharger electrical generation limiting means" of the fifth aspect by setting the electrical generation instruction amount 1 to the electrical generation amount limit value Wd at step 114.

In the above-described second embodiment, the exhaust temperature sensor 30 may correspond to the "exhaust temperature detection means" of the sixth aspect, and the exhaust pressure sensor 32 may correspond to the "exhaust pressure detection means" of the sixth aspect.

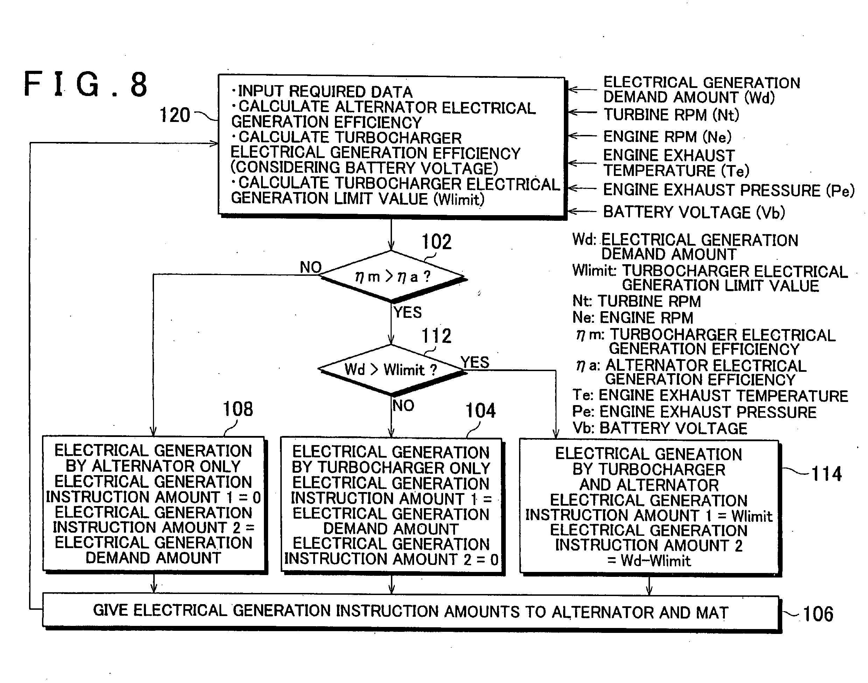

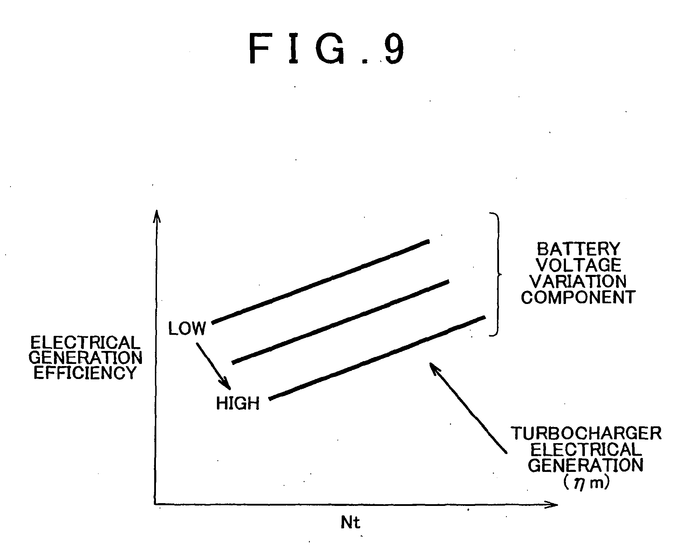

The third embodiment of the present invention is described below, with reference made to FIG 8 and FIG 9. The system of this embodiment can be implemented by causing the electrical generation amount control apparatus 24 to execute the routine shown in FIG. 8, as described below, in place of the routine shown in FIG 7.

In the system of this embodiment, the electrical power generated by the MAT 10 is converted to a DC voltage by the inverter 12 and supplied to the battery 14. In this case, the inverter 12 is required to perform voltage conversion so that the output voltage therefrom is higher than the battery voltage Vb.

The inverter 12 performs full-wave rectification of the AC voltage generated by the MAT 10, enabling the most efficient conversion of the electrical power to DC electrical power. By limiting the region of rectification by the inverter 12 to the high-voltage part of the AC voltage, it is possible to increase the output voltage from the inverter 12. For this reason, in this embodiment, the conduction pattern applied to the inverter 12 is varied in accordance with the battery voltage Vb, so that the output voltage from the inverter 12 is an appropriately high value greater than the battery voltage Vb.

However, the electrical power conversion efficiency decreases the greater is the limitation of rectification to the high-voltage region. For this reason, in this embodiment the efficiency of supply of electrical power from the MAT 10 to the battery 14 decreases the higher is the battery voltage Vb. That is, the effective electrical generation efficiency of the MAT 10 in this system tends to be decrease, the higher is the battery voltage Vb. As a convenience, this effective electrical generation efficiency is also referred to hereinunder as the "electrical generation efficiency ηm" in this embodiment.

In the above-described first and second embodiments, the electrical generation efficiency of the MAT 10 alone, that is, the ratio between the electrical power generated by the MAT 10 and the amount of fuel required to perform that electrical generation is the electrical generation efficiency ηm. In this case, because the battery voltage Vb is not taken into consideration, a condition can occurs in which the value of ηm exceeds, the effective electrical generation efficiency and, even though the efficiency of the MAT 10 is less than the efficiency of the alternator 20, electrical generation processing being executed that gives priority to the MAT 10.

Given the above, in calculating the electrical generation efficiency ηm of the MAT 10 in this embodiment, the influence of the battery voltage Vb is taken into consideration and the effective electrical generation efficiency ηm of the MAT 10 is determined based on the output supplied to the battery 14 from the inverter 12. For this reason, the system of this embodiment performs more appropriate selective use of electrical generation by the MAT 10 and electrical generation by the alternator 20 than in the first and second embodiments, thereby enabling improvement of the electrical generation efficiency.

The specific processing performed in the third embodiment of the present invention is described below. FIG. 8 is a flowchart showing the routing executed by the electrical generation amount control apparatus 24 in this embodiment. With the exception of step 110 being replaced by step 120, FIG 8 is the same routine as shown in FIG 7. In FIG 8, steps that are the same as steps in FIG 7 are assigned the same reference numerals and are either not described or described only briefly hereinunder.

In the routine shown in FIG. 8, the processing of step 120 is first performed. At this point, the battery voltage Vb is captured, along with the turbine revolution speed Nt and the like, as required data. In this case, the electrical generation efficiency ηa of the alternator 20, the electrical generation efficiency ηm of the MAT 10, and the electrical generation amount limit value Wlimit of the MAT 10 are calculated based on the captured data.

In this embodiment, the electrical generation amount control apparatus 24 stores a map shown in FIG 9. Fig. 9 is a map setting forth the electrical generation efficiency ηm of the MAT 10, with the turbine revolution speed Nr and the battery voltage Vb as parameters. Specifically, the map shown in FIG 9 sets forth the electrical generation efficiency ηm to be higher, the higher is the battery voltage Vb.

At the above-noted step 120, the electrical generation efficiency ηm corresponding to the turbine revolution speed Nt and the battery voltage Vb is calculated in accordance with this map. As a result, in this embodiment the effective electrical generation efficiency ηm is determined as the electrical generation efficiency ηm of the MAT 10, based on the electrical power supplied to the battery 14 from the inverter 12.

In the routine shown in FIG 8, subsequent processing is performed the same as in the second embodiment. As a result, the system of this embodiment divides the electrical generation burden based on a comparison between the effective electrical generation efficiency ηm of the MAT 10 and the electrical generation efficiency ηa of the alternator 20. For this reason, the system of this embodiment enables more efficient electrical generation than the first or second embodiment.

In the above-described third embodiment, the electrical generation amount control apparatus 24 may implement the "battery voltage sensing means" of the seventh aspect by capturing the battery voltage Vb at step 120.

While the invention has been described with reference to what are considered to be preferred embodiments thereof, it is to be understood that the invention is not limited to the disclosed embodiments or constructions. The scope is defined by the claims.

## Claims

1. An electrical generation control apparatus in a vehicle, **characterized by** comprising:
an alternator (20) that converts an output torque of an internal combustion engine into electrical energy;
a turbocharger (10) that has an electrical generation function that converts rotation of at least one of a turbine and a compressor into electrical energy;
a first efficiency calculation means that calculates an electrical generation efficiency of the turbocharger (10) as a first efficiency;
a second efficiency calculation means that calculates an electrical generation efficiency of the alternator (20) as a second efficiency;
an electrical generation instruction amount calculation means that calculates a first electrical generation instruction amount to be demanded of the turbocharger (10) and a second electrical generation instruction amount to be demanded of the alternator (20), based on the first efficiency and the second efficiency;
a first control means that instructs the turbocharger (10) to generate electricity responsive to the first electrical generation instruction amount; and
a second control means that instructs the alternator (20) to generate electricity responsive to the second electrical generation instruction amount.

2. The electrical generation control apparatus in a vehicle according to claim 1, further comprising:
a turbo revolution speed detection means that detects a turbo revolution speed; and
an engine revolution speed detection means that detects an engine revolution speed, wherein
the first efficiency calculation means calculates the first efficiency based on the turbo revolution speed and the second efficiency calculation means calculates the second efficiency based on the engine revolution speed.

3. The electrical generation control apparatus in a vehicle according to claim 1 or 2, wherein
the electrical generation instruction amount calculation means calculates the first electrical generation instruction amount as a value that is greater than the second electrical generation instruction amount if the first efficiency is higher than the second efficiency, and calculates the second electrical generation instruction amount as a value that is greater than the first electrical generation instruction amount if the second efficiency is greater than the first efficiency.

4. The electrical generation control apparatus in a vehicle according to any one of claims 1 to 3, further comprising:
an electrical generation demand amount calculation means that calculates an electrical generation demand amount in a vehicle, wherein
the electrical generation instruction amount calculation means includes:
a first possible electrical power acquisition means that acquires an electrical power generated by the turbocharger (10) as a first possible electrical power;
a second possible electrical power acquisition means that acquires the electrical power generated by the alternator (20) as a second possible electrical power;
a turbocharger electrical generation priority means that allocates the electrical generation demand amount with priority to the first electrical generation instruction amount if the first efficiency is higher than the second efficiency and taking a part of the electrical generation demand amount exceeding the first possible electrical power as the second electrical generation instruction amount; and
an alternator electrical generation priority means that allocates the electrical generation demand amount with priority to the second electrical generation instruction amount if the second efficiency is higher than the first efficiency and taking a part of the electrical generation demand amount exceeding the second possible electrical power as the first electrical generation instruction amount.

5. The electrical generation control apparatus in a vehicle according to any one of claims 1 to 4, further comprising:
an electrical generation limit value calculation means that calculates the allowed amount of electrical power generation by the turbocharger (10) as the electrical generation amount limit value, based on a condition of the internal combustion engine, wherein
the electrical generation instruction amount calculation means includes a turbocharger electrical generation limiting means that limits the first electrical generation instruction amount to the electrical generation amount limit value or lower.

6. The electrical generation control apparatus in a vehicle according to claim 5, further comprising;
at least one of an exhaust temperature detection means that detects an exhaust system temperature and an exhaust pressure detection means that detects an exhaust system pressure, wherein
the electrical generation limit value calculation means calculates the electrical generation amount limit value, referencing at least one of the exhaust system temperature and the exhaust system pressure as the internal combustion engine condition.

7. The electrical generation control apparatus in a vehicle according to any one of claims 1 to 6, further comprising:
a battery voltage sensing means that senses a voltage of a battery storing electrical energy generated by the turbocharger (10), wherein
the first efficiency calculation means calculates the first efficiency, taking into consideration the voltage of the battery.

8. An electrical generation control method in a vehicle having an alternator (20) capable of converting an output torque of an internal combustion engine into electrical energy and a turbocharger (10) having an electrical generation function capable of converting rotation of a turbine and a compressor into electrical energy, **characterized by** comprising the steps of:
calculating an electrical generation efficiency of the turbocharger (10) as a first efficiency;
calculating an electrical generation efficiency of the alternator (20) as a second efficiency;
calculating a first electrical generation instruction amount to be demanded of the turbocharger (10) and a second electrical generation instruction amount to be demanded of the alternator (20), based on the first efficiency and the second efficiency;
instructing the turbocharger (10) to generate electricity responsive to the first electrical generation instruction amount; and
instructing the alternator (20) to generate electricity responsive to the second electrical generation instruction amount.

9. The electrical generation control method in a vehicle according to claim 8, further comprising the steps of:
detecting a turbo revolution speed;
detecting an engine revolution speed;
calculating the first efficiency based on the detected turbo revolution speed; and
calculating the detected second efficiency based on the detected engine revolution speed.

10. The electrical generation control method in a vehicle according to claim 8 or 9, further comprising the steps of:
calculating the first electrical generation instruction amount as a value that is greater than the second electrical generation instruction amount if the first efficiency is higher than the second efficiency; and
calculating the second electrical generation instruction amount as a value that is greater than the first electrical generation instruction amount if the second efficiency is greater than the first efficiency.

11. The electrical generation control method in a vehicle according to any one of claims 8 to 10, comprising the steps of:
calculating an electrical generation demand amount in a vehicle;
acquiring an electrical power generated by the turbocharger (10) as a first possible electrical power;
acquiring the electrical power generated by the alternator (20) as a second possible electrical power;
allocating the electrical generation demand amount with priority to the first electrical generation instruction amount if the first efficiency is higher than the second efficiency and taking a part of the electrical generation demand amount exceeding the first possible electrical power as the second electrical generation instruction amount; and
allocating the electrical generation demand amount with priority to the second electrical generation instruction amount if the second efficiency is higher than the first efficiency and taking a part of the electrical generation demand amount exceeding the second possible electrical power as the first electrical generation instruction amount.

12. The electrical generation control method in a vehicle according to any one of claims 8 to 11, further comprising the steps of:
calculating the allowed amount of electrical power generation by the turbocharger (10) as the electrical generation amount limit value, based on a condition of the internal combustion engine; and
limiting the first electrical generation instruction amount to the electrical generation amount limit value or lower.

13. The electrical generation control method in a vehicle according to claim 12, further comprising the steps of:
detecting at least one of an exhaust system temperature and an exhaust system pressure; and
calculating the electrical generation amount limit value, referencing at least one of the exhaust system temperature and the exhaust system pressure as the internal combustion engine condition.

14. The electrical generation control method in a vehicle according to any one of claims 8 to 13, further comprising the steps of:
sensing a voltage of a battery storing electrical energy generated by the turbocharger (10); and
calculating the first efficiency, taking into consideration the voltage of the battery.

## Patentansprüche

1. Elektrizitätserzeugungs-Steuervorrichtung in einem Fahrzeug, **dadurch gekennzeichnet, dass** sie aufweist:
einen Drehstromgenerator (20), der ein Ausgangsdrehmoment eines Verbrennungsmotors in elektrische Energie umwandelt;
einen Turbolader (10), der eine Elektrizitätserzeugungsfunktion aufweist und der die Drehung einer Turbine und/oder eines Kompressors in elektrische Energie umwandelt;
ein erstes Wirkungsgrad-Berechnungsmittel, das den Wirkungsgrad der Elektrizitätserzeugung durch den Turbolader (10) als einen ersten Wirkungsgrad berechnet;
ein zweites Wirkungsgrad-Berechnungsmittel, das den Wirkungsgrad der Elektrizitätserzeugung durch den Drehstromgenerator (20) als einen zweiten Wirkungsgrad berechnet;
ein Mittel zur Berechnung einer Elektrizitätserzeugungs-Sollmenge, das eine erste Elektrizitätserzeugungs-Sollmenge, die dem Turbolader (10) abgefordert werden soll, und eine zweite Elektrizitätserzeugungs-Sollmenge, die dem Drehstromgenerator (20) abgefordert werden soll, auf der Basis des ersten Wirkungsgrads und
des zweiten Wirkungsgrads berechnet;
ein erstes Steuermittel, das dem Turbolader (10) ansprechend auf die erste Elektrizitätserzeugungs-Sollmenge befiehlt, Elektrizität zu erzeugen; und
ein zweites Steuermittel, das dem Drehstromgenerator (20) ansprechend auf die zweite Elektrizitätserzeugungs-Sollmenge befiehlt, Elektrizität zu erzeugen.

2. Elektrizitätserzeugungs-Steuervorrichtung in einem Fahrzeug nach Anspruch 1, ferner aufweisend:
ein Turbodrehzahl-Erfassungsmittel, das eine Turbodrehzahl erfasst; und
ein Motordrehzahl-Erfassungsmittel, das eine Motordrehzahl erfasst, wobei
das erste Wirkungsgrad-Berechnungsmittel den ersten Wirkungsgrad auf der Basis der Turbodrehzahl berechnet, und das zweite Wirkungsgrad-Berechnungsmittel den zweiten Wirkungsgrad auf der Basis der Motordrehzahl berechnet.

3. Elektrizitätserzeugungs-Steuervorrichtung in einem Fahrzeug nach einem der Ansprüche 1 oder 2, wobei
das Mittel zur Berechnung einer Elektrizitätserzeugungs-Sollmenge die erste Elektrizitätserzeugungs-Sollmenge als einen Wert berechnet, der größer ist als die zweite Elektrizitätserzeugungs-Sollmenge, falls der erste Wirkungsgrad höher ist
als der zweite Wirkungsgrad, und die zweite Elektrizitätserzeugungs-Sollmenge als einen Wert berechnet, der größer ist als die erste Elektrizitätserzeugungs-Sollmenge, falls der zweite Wirkungsgrad größer ist als der erste Wirkungsgrad.

4. Elektrizitätserzeugungs-Steuervorrichtung in einem Fahrzeug nach einem der Ansprüche 1 bis 3, ferner aufweisend:
ein Mittel zur Berechnung einer Elektrizitätserzeugungs-Bedarfsmenge, das eine Elektrizitätserzeugungs-Bedarfsmenge in einem Fahrzeug berechnet, wobei
das Mittel zur Berechnung einer Elektrizitätserzeugungs-Sollmenge aufweist:
ein erstes Mittel zur Ermittlung einer möglichen elektrischen Leistung, das eine elektrische Leistung, die vom Turbolader (10) erzeugt wird, als erste mögliche elektrische Leistung ermittelt;
ein zweites Mittel zur Ermittlung einer möglichen elektrischen Leistung, das die elektrische Leistung, die vom Drehstromgenerator (20) erzeugt wird, als zweite mögliche elektrische Leistung ermittelt;
ein Mittel, das die Elektrizitätserzeugung durch den Turbolader priorisiert und das die Elektrizitätserzeugungs-Bedarfsmenge vorrangig der ersten Elektrizitätserzeugungs-Sollmenge zuordnet, falls der erste Wirkungsgrad höher ist als der zweite Wirkungsgrad, und das einen Teil der Elektrizitätserzeugungs-Bedarfsmenge, der die erste mögliche elektrische Leistung überschreitet, als zweite Elektrizitätserzeugungs-Sollmenge nimmt; und
ein Mittel, das die Elektrizitätserzeugung durch den Drehstromgenerator priorisiert und das die Elektrizitätserzeugungs-Bedarfsmenge vorrangig der zweiten Elektrizitätserzeugungs-Sollmenge zuordnet, falls der zweite Wirkungsgrad höher ist als der erste Wirkungsgrad, und das einen Teil der Elektrizitätserzeugungs-Bedarfsmenge, der die zweite mögliche elektrische Leistung überschreitet, als erste Elektrizitätserzeugungs-Sollmenge nimmt.

5. Elektrizitätserzeugungs-Steuervorrichtung in einem Fahrzeug nach einem der Ansprüche 1 bis 4, ferner aufweisend:
ein Mittel zur Berechnung eines Elektrizitätserzeugungs-Grenzwerts, das die zulässige Menge an vom Turbolader (10) erzeugter elektrischer Leistung als Grenzwert für die erzeugte Elektrizitätsmenge auf der Basis einer Bedingung des Verbrennungsmotors berechnet, wobei
das Mittel zur Berechnung einer Elektrizitätserzeugungs-Sollmenge ein Mittel zur Begrenzung der Elektrizitätserzeugung durch den Turbolader aufweist, das die erste Elektrizitätserzeugungs-Sollmenge auf den Elektrizitätserzeugungs-Grenzwert oder darunter begrenzt.

6. Elektrizitätserzeugungs-Steuervorrichtung in einem Fahrzeug nach Anspruch 5, ferner aufweisend:
ein Abgastemperatur-Erfassungsmittel, das eine Temperatur des Abgassystems erfasst, und/oder ein Abgasdruck-Erfassungsmittel, das einen Druck des Abgassystems erfasst, wobei
das Mittel zur Berechnung eines Elektrizitätserzeugungs-Grenzwerts den Elektrizitätserzeugungs-Grenzwert unter Bezugnahme auf die Temperatur des Abgassystems und/oder den Druck des Abgassystems als die Bedingung des Verbrennungsmotors berechnet.

7. Elektrizitätserzeugungs-Steuervorrichtung in einem Fahrzeug nach einem der Ansprüche 1 bis 6, ferner aufweisend:
einen Batteriespannungssensor, der die Spannung einer Batterie erfasst, die vom Turbolader (10) erzeugte elektrische Energie speichert, wobei
das erste Wirkungsgrad-Berechnungsmittel den ersten Wirkungsgrad unter Berücksichtigung der Batteriespannung berechnet.

8. Elektrizitätserzeugungs-Steuerverfahren in einem Fahrzeug mit einem Drehstromgenerator (20), der in der Lage ist, ein Ausgangsdrehmoment eines Verbrennungsmotors in elektrische Energie umzuwandeln, und mit einem Turbolader (10), der eine Elektrizitätserzeugungsfunktion aufweist und der in der Lage ist, die Drehung einer Turbine und eines Kompressors in elektrische Energie umzuwandeln, **dadurch gekennzeichnet, dass** es die folgenden Schritte umfasst:
Berechnen eines Wirkungsgrads, mit dem der Turbolader (10) Elektrizität erzeugt, als ersten Wirkungsgrad;
Berechnen eines Wirkungsgrads, mit dem der Drehstromgenerator (20) Elektrizität erzeugt, als zweiten Wirkungsgrad;
Berechnen einer ersten Elektrizitätserzeugungs-Sollmenge, die dem Turbolader (10) abgefordert werden soll, und einer zweiten Elektrizitätserzeugungs-Sollmenge, die dem Drehstromgenerator (20) abgefordert werden soll, auf der Basis des ersten Wirkungsgrads und des zweiten Wirkungsgrads;
Ausgeben eines Elektrizitätserzeugungsbefehls an den Turbolader (10) ansprechend auf die erste Elektrizitätserzeugungs-Sollmenge; und
Ausgeben eines Elektrizitätserzeugungsbefehls an den Drehstromgenerator (20), ansprechend auf die zweite Elektrizitätserzeugungs-Sollmenge.

9. Elektrizitätserzeugungs-Steuerverfahren in einem Fahrzeug nach Anspruch 8, ferner die folgenden Schritte umfassend:
Erfassen einer Turbodrehzahl;
Erfassen einer Motordrehzahl;
Berechnen des ersten Wirkungsgrads auf der Basis der erfassten Turbodrehzahl; und
Berechnen des erfassten zweiten Wirkungsgrads auf der Basis der erfassten Motordrehzahl.

10. Elektrizitätserzeugungs-Steuerverfahren in einem Fahrzeug nach Anspruch 8 oder 9, ferner die folgenden Schritte umfassend:
Berechnen der ersten Elektrizitätserzeugungs-Sollmenge als Wert, der größer ist als die zweite Elektrizitätserzeugungs-Sollmenge, falls der erste Wirkungsgrad höher ist als der zweite Wirkungsgrad; und
Berechnen der zweiten Elektrizitätserzeugungs-Sollmenge als Wert, der größer ist als die erste Elektrizitätserzeugungs-Sollmenge, falls der zweite Wirkungsgrad größer ist als der erste Wirkungsgrad.

11. Elektrizitätserzeugungs-Steuerverfahren in einem Fahrzeug nach einem der Ansprüche 8 bis 10, die folgenden Schritte umfassend:
Berechnen einer Elektrizitätserzeugungs-Bedarfsmenge in einem Fahrzeug;
Ermitteln einer elektrischen Leistung, die vom Turbolader (10) erzeugt wird, als erste mögliche elektrische Leistung;
Ermitteln der elektrischen Leistung, die vom Drehstromgenerator (20) erzeugt wird, als zweite mögliche elektrische Leistung;
Zuordnen der Elektrizitätserzeugungs-Bedarfsmenge vorrangig zur ersten Elektrizitätserzeugungs-Sollmenge, falls der erste Wirkungsgrad höher ist als der zweite
Wirkungsgrad, und Nehmen eines Teils der Elektrizitätserzeugungs-Bedarfsmenge, der die erste mögliche elektrische Leistung überschreitet, als zweite Elektrizitätserzeugungs-Sollmenge; und
Zuordnen der Elektrizitätserzeugungs-Bedarfsmenge vorrangig zur zweiten Elektrizitätserzeugungs-Sollmenge, falls der zweite Wirkungsgrad höher ist als der erste Wirkungsgrad, und Nehmen eines Teils der Elektrizitätserzeugungs-Bedarfsmenge, der die zweite mögliche elektrische Leistung überschreitet, als erste Elektrizitätserzeugungs-Sollmenge.

12. Elektrizitätserzeugungs-Steuerverfahren in einem Fahrzeug nach einem der Ansprüche 8 bis 11, ferner die folgenden Schritte umfassend:
Berechnen der zulässigen Menge an vom Turbolader (10) erzeugter elektrischer Leistung als Grenzwert für die erzeugte Elektrizitätsmenge auf der Basis einer Bedingung des Verbrennungsmotors; und
Begrenzen der ersten Elektrizitätserzeugungs-Sollmenge auf den Grenzwert für die erzeugte Elektrizitätsmenge oder darunter.

13. Elektrizitätserzeugungs-Steuerverfahren in einem Fahrzeug nach Anspruch 12, ferner die folgenden Schritte umfassend:
Erfassen der Temperatur eines Abgassystems und/oder des Drucks eines Abgassystems; und
Berechnen des Grenzwerts für die erzeugte Elektrizitätsmenge unter Bezugnahme auf die Temperatur des Abgassystems und/oder den Druck des Abgassystems als Bedingung des Verbrennungsmotors.

14. Elektrizitätserzeugungs-Steuerverfahren in einem Fahrzeug nach einem der Ansprüche 8 bis 13, ferner die folgenden Schritte umfassend:
Erfassen der Spannung einer Batterie, die vom Turbolader (10) erzeugte elektrische Energie speichert; und
Berechnen des ersten Wirkungsgrads unter Berücksichtigung der Batteriespannung.

## Revendications

1. Appareil de commande de génération électrique dans un véhicule, **caractérisé en ce qu'**il comporte :
un alternateur (20) qui convertit un couple de sortie d'un moteur à combustion interne en énergie électrique ;
un turbo chargeur (10) qui possède une fonction de génération électrique qui convertit une rotation d'au moins l'un d'une turbine et d'un compresseur en énergie électrique;
un moyen de calcul de premier rendement qui calcule un rendement de génération électrique du turbo chargeur (10) en tant que premier rendement ;
un moyen de calcul de second rendement qui calcule un rendement de génération électrique de l'alternateur (20) en tant que second rendement ;
un moyen de calcul de quantité d'instruction de génération électrique qui calcule une première quantité d'instruction de génération électrique à demander au turbo chargeur (10) et une seconde quantité d'instruction de génération électrique à demander à l'alternateur (20), en fonction du premier rendement et du second rendement ;
un premier moyen de commande qui ordonne au turbo chargeur (10) de générer de l'électricité en réponse à la première quantité d'instruction de génération électrique ; et
un second moyen de commande qui ordonne à l'alternateur (20) de générer de l'électricité en réponse à la seconde quantité d'instruction de génération électrique.

2. Appareil de commande de génération électrique dans un véhicule selon la revendication 1, comportant en outre :
un moyen de détection de vitesse de révolution turbo qui détecte une vitesse de révolution turbo ; et
un moyen de détection de vitesse de révolution de moteur qui détecte une vitesse de révolution de moteur, dans lequel
le moyen de calcul de premier rendement calcule le premier rendement en fonction de la vitesse de révolution turbo et le moyen de calcul de second rendement calcule le second rendement en fonction de la vitesse de révolution du moteur.

3. Appareil de commande de génération électrique dans un véhicule selon la revendication 1 ou 2, dans lequel
le moyen de calcul de quantité d'instruction de génération électrique calcule la première quantité d'instruction de génération électrique en tant que valeur qui est supérieure à la seconde quantité d'instruction de génération électrique si le premier rendement est supérieur au second rendement, et calcule la seconde quantité d'instruction de génération électrique en tant que valeur qui est supérieure à la première quantité d'instruction de génération électrique si le second rendement est supérieur au premier rendement.

4. Appareil de commande de génération électrique dans un véhicule selon l'une quelconque des revendications 1 à 3, comportant en outre :
un moyen de calcul de quantité de demande de génération électrique qui calcule une quantité de demande de génération électrique dans un véhicule, dans lequel
le moyen de calcul de quantité d'instruction de génération électrique comprend :
un moyen d'acquisition de première puissance électrique possible qui acquiert une puissance électrique générée par le turbo chargeur (10) en tant que première puissance électrique possible ;
un moyen d'acquisition de seconde puissance électrique possible qui acquiert la puissance électrique générée par l'alternateur (20) en tant que seconde puissance électrique possible ;
un moyen de priorité de génération électrique de turbo chargeur qui alloue la quantité de demande de génération électrique en priorité à la première quantité d'instruction de génération électrique si le premier rendement est supérieur au second rendement et prend une partie de la quantité de demande de génération électrique dépassant la première puissance électrique possible en tant que seconde quantité d'instruction de génération électrique; et
un moyen de priorité de génération électrique d'alternateur qui alloue la quantité de demande de génération électrique en priorité à la seconde quantité d'instruction de génération électrique si le second rendement est supérieur au premier rendement et prend une partie de la quantité de demande de génération électrique dépassant la seconde puissance électrique possible en tant que première quantité d'instruction de génération électrique.

5. Appareil de commande de génération électrique dans un véhicule selon l'une quelconque des revendications 1 à 4, comportant en outre :
un moyen de calcul de valeur limite de génération électrique qui calcule la quantité permise de génération de puissance électrique par le turbo chargeur (10) en tant que valeur limite de quantité de génération électrique, en fonction d'une condition du moteur à combustion interne, dans lequel
le moyen de calcul de quantité d'instruction de génération électrique comprend un moyen de limitation de génération électrique de turbo chargeur qui limite la première quantité d'instruction de génération électrique à la valeur limite de quantité de génération électrique ou moins.

6. Appareil de commande de génération électrique dans un véhicule selon la revendication 5, comportant en outre :
au moins l'un d'un moyen de détection de température de gaz d'échappement qui détecte la température du système de gaz d'échappement et d'un moyen de détection de pression de gaz d'échappement qui détecte une pression du système de gaz d'échappement, dans lequel
le moyen de calcul de valeur limite de génération électrique calcule la valeur limite de quantité de génération électrique, en se référant au moins à l'une de la température du système de gaz d'échappement et de la pression du système de gaz d'échappement en tant que condition du moteur à combustion interne.

7. Appareil de commande de génération électrique dans un véhicule selon l'une quelconque des revendications 1 à 6, comportant en outre :
un moyen de détection de tension de batterie qui détecte une tension de batterie stockant l'énergie électrique générée par le turbo chargeur (10), dans lequel
le moyen de calcul de premier rendement calcule le premier rendement, en prenant en considération la tension de la batterie.

8. Appareil de commande de génération électrique dans un véhicule possédant un alternateur (20) pouvant convertir un couple de sortie d'un moteur à combustion interne en énergie électrique et un turbo chargeur (10) possédant une fonction de génération électrique pour convertir la rotation d'une turbine et d'un compresseur en énergie électrique, **caractérisé en ce qu'**il comporte les étapes consistant à :
calculer un rendement de génération électrique du turbo chargeur (10) en tant que premier rendement ;
calculer un rendement de génération électrique de l'alternateur (20) en tant que second rendement ;
calculer une première quantité d'instruction de génération électrique à demander au turbo chargeur (10) et une seconde quantité d'instruction de génération électrique à demander à l'alternateur (20), en fonction du premier rendement et du second rendement ;
ordonner au turbo chargeur (10) de générer de l'électricité en réponse à la première quantité d'instruction de génération électrique ; et
ordonner à l'alternateur (20) de générer de l'électricité en réponse à la seconde quantité d'instruction de génération électrique.

9. Procédé de commande de génération électrique dans un véhicule selon la revendication 8, comportant en outre les étapes consistant à :
détecter une vitesse de révolution turbo ;
détecter une vitesse de révolution de moteur ;
calculer le premier rendement en fonction de la vitesse de révolution turbo détectée ; et
calculer le second rendement détecté en fonction de la vitesse de révolution de moteur détectée.

10. Procédé de commande de génération électrique dans un véhicule selon la revendication 8 ou 9, comportant en outre les étapes consistant à :
calculer la première quantité d'instruction de génération électrique en tant que valeur qui est supérieure à la seconde quantité d'instruction de génération électrique si le premier rendement est supérieur au second rendement ; et
calculer la seconde quantité d'instruction de génération électrique en tant que valeur qui est supérieure à la première quantité d'instruction de génération électrique si le second rendement est supérieur au premier rendement.

11. Procédé de commande de génération électrique dans un véhicule selon l'une quelconque des revendications 8 à 10, comportant les étapes consistant à :
calculer une quantité de demande de génération électrique dans un véhicule ;
acquérir une puissance électrique générée par le turbo chargeur (10) en tant que première puissance électrique possible ;
acquérir la puissance électrique générée par l'alternateur (20) en tant que seconde puissance électrique possible ;
allouer la quantité de demande de génération électrique en priorité à la première quantité d'instruction de génération électrique si le premier rendement est supérieur au second rendement et en prenant une partie de la quantité de demande de génération électrique dépassant la première puissance électrique possible en tant que seconde quantité d'instruction de génération électrique ; et
allouer la quantité de demande de génération électrique en priorité à la seconde quantité d'instruction de génération électrique si le second rendement est supérieur au premier rendement et en prenant une partie de la quantité de demande de génération électrique dépassant la seconde puissance électrique possible en tant que première quantité d'instruction de génération électrique.

12. Procédé de commande de génération électrique dans un véhicule selon l'une quelconque des revendications 8 à 11, comportant en outre les étapes consistant à :
calculer la quantité permise de génération de puissance électrique par le turbo chargeur (10) en tant que valeur limite de quantité de génération électrique, en fonction d'une condition du moteur à combustion interne ; et
limiter la première quantité d'instruction de génération électrique à la valeur limite de quantité de génération électrique ou moins.

13. Procédé de commande de génération électrique dans un véhicule selon la revendication 12, comportant en outre les étapes consistant à :
détecter au moins l'une d'une température du système de gaz d'échappement et d'une pression du système de gaz d'échappement ; et
calculer la valeur limite de quantité de génération électrique, en se référant au moins à l'une de la température du système de gaz d'échappement et de la pression du système de gaz d'échappement en tant que condition du moteur à combustion interne.

14. Procédé de commande de génération électrique dans un véhicule selon l'une quelconque des revendications 8 à 13, comportant en outre les étapes consistant à :
détecter une tension d'une batterie stockant l'énergie électrique générée par le turbo chargeur (10) ; et
calculer le premier rendement, en prenant en considération la tension de la batterie.
